# EUROPÄISCHE PATENTSCHRIFT

(11) **EP 1 780 118 B1**
(45) Veröffentlichungstag und Bekanntmachung des Hinweises auf die Patenterteilung: **11.04.2012**
(21) Anmeldenummer: 06016683.2
(22) Anmeldetag: 10.08.2006
(51) Int. Cl.: B63H 25/52, B63B 3/40, B63H 25/38, G01B 5/02, G01B 5/14

(54) **Vorrichtung zum Kontrollieren und Messen des Halslagerspiels des Ruderschaftes eines Ruders für Wasserfahrzeuge**
Arrangement for controlling and measuring the clearance between the rudder stock bearing and the rudder stock in a watercraft
Dispositif pour contrôler et mesurer le jeu entre la mèche de gouvernail d'un bateau et son palier

(30) Priorität: 31.10.2005 DE 202005017135 U; 13.12.2005 DE 202005019626 U
(43) Veröffentlichungstag der Anmeldung: 02.05.2007
(73) Patentinhaber: Becker Marine Systems GmbH & Co. KG, 21079 Hamburg (DE)
(72) Erfinder: Kluge, Mathias, 22299 Hamburg (DE); Plappert, Dieter, 22559 Hamburg (DE)
(74) Vertreter: Richter Werdermann Gerbaulet Hofmann

(56) Entgegenhaltungen:
- DE-A1- 3 814 943
- JP-A- 9 014 950
- JP-A- 10 103 943
- US-A- 3 079 692

## Beschreibung

Die Erfindung betrifft eine Vorrichtung zum Kontrollieren und Messen des Halslagerspiels des Ruderschaftes eines Ruders für Wasserfahrzeuge.

Das Spiel im Halslagerbereich zwischen dem Ruderschaft eines Ruders für Wasserfahrzeuge und dem Ruderkoker unterliegt ständiger Kontrollen, wobei der Ruderschaft Schwenkbewegungen um seine Längsachse unterworfen wird, wobei dann das verbleibende Spiel gemessen wird. Diese Kontrollmessungen des Spiels werden bei im Dock liegenden Schiffen vorgenommen. Eine Unterwasserüberprüfung durch Taucher bei sich im Wasser befindlichen Schiffen ist nicht möglich.

Die JP 09014950 A offenbart ein Gerät zum automatischen Messen der Breite enger Spalten. Dieses Gerät umfasst einen flexiblen Arm, an dessen einem Ende ein Detektorelement zum Messen der Spaltbreite und an dessen anderem Ende ein Handschalter zur Bedienung des Detektorelementes angeordnet sind. Die Messsignale des Detektorelementes werden in digitale Werte konvertiert und mittels eines Displays angezeigt.

Aufgabe der vorliegenden Erfindung ist es, eine Vorrichtung zum Kontrollieren und Messen des Halslagerspiels bei Rudern von Wasserfahrzeugen zu schaffen, die Unterwasser eingesetzt werden kann, so dass Taucher die Kontrolle und die Messung des Spiels vornehmen können, wodurch die Möglichkeit gegeben ist, die Spielkontrolle zu jeder Zeit vornehmen zu können.

Gelöst wird diese Aufgabe mit einer Vorrichtung mit den im Anspruch 1 angegebenen Merkmalen, mit einem Verfahren mit den im Anspruch 12 angegebenen Merkmalen und mit einer Verwendung einer solchen Vorrichtung mit den im Anspruch 13 angegebenen Merkmalen.

Hiernach ist eine gattungsgemäße Vorrichtung durch eine vermittels einer, mit einer griffartigen Handhabe versehenen Führungsschiene in den Spalt zwischen dem Außenlager und dem Innenlager bis in den Spießmessbereich einführbaren Messschiene aus einem federnd-elastischen und eine Eigensteifigkeit aufweisenden Material mit an deren freien Ende angeordneten Messsonde für die Spielbreitenmessung, gekennzeichnet, wobei die Messschiene mit der Messsonde mit vorgegebener Stärke gegen Messschienen mit Messsonden mit anderen Stärken bei zur Erreichung einer Übereinstimmung der Spielbreite mit der Stärke einer Messschiene mit der Messsonde ausgetauscht werden.

Mit einer derart erfindungsgemäß ausgebildeten Vorrichtung besteht die Möglichkeit, das Spiel des Ruderschaftes in seinem Lagerbereich im Ruderkoker mit einfachen mechanischen Mitteln sicher zu kontrollieren und zu messen, wobei insbesondere die Kontrollmessungen von Tauchern unter Wasser durchgeführt werden können, so dass kein Erfordernis mehr besteht, dass das Schiff sich in einem Trockendock befindet. Der weitere Vorteil besteht darin, dass zu jeder Zeit diese Kontrollmessungen vorgenommen werden können.

Die Handhabung der Vorrichtung ist einfach. Die auf der Führungsschiene verschieblich gelagerte Messschiene mit der an ihren freien Ende angeordneten Messsonde wird durch eine Öffnung in der Wand des Ruderblattes des Ruders so weit eingeschoben, dass das abgewinkelte Ende der Führungsschiene im Innenraum des Ruderblattes zu liegen kommt. Hieraufhin wird die vorzugsweise die doppelte Länge der Führungsschiene aufweisende Messschiene in den Spalt zwischen den beiden Lagern des Ruderschaftes und des Ruderkokers eingeschoben, bis die Messsonde am Ende der Messschiene im Spielmessbereich zu liegen kommt. Wird dabei festgestellt, dass das Spiel eine größere Breite gegenüber der Gesamtstärke der Messschiene und der Messsonde aufweist, werden solange Messschienen mit Messsonden mit anderen Gesamtstärken eingeführt, bis die Spielbreite der Gesamtstärke der eingeschobenen Messschiene mit der Messsonde entspricht, so dass durch die durch die Messschienen und ihren Messsonden vorgegebenen Werte die Breite des Spiels genau bemessen werden kann. Für diese Messungen stehen eine Anzahl von Messschienen mit ihren Messsonden mit verschiedenen Stärken zur Verfügung.

Vorteilhafte Ausgestaltungen der Erfindung sind Gegenstand der Unteransprüche.

Nach einer weiteren Ausführungsform sieht die Erfindung eine Vorrichtung vor, die die mit einer griffartigen Handhabe versehene Führungsschiene mit an deren freien Ende bogenförmig abgewinkelten Führungsschienenabschnitt und die auf der Führungsschiene verschieblichen und im Bereich des abgewinkelten Führungsschienenabschnittes umgelenkten sowie in den Spalt zwischen dem Außenlager und dem Innenlager bis in den Spielmessbereich einführbaren Messschiene aus einem federnd-elastischen und eine Eigensteifigkeit aufweisenden Messschiene mit an deren freien Ende angeordneten Messsonde für die Spielbreitenmessung umfasst. Während die Führungsschiene aus einem starren und eine hohe Eigensteifigkeit aufweisenden Material besteht, ist die Messschiene aus einem federnd-elastischen Material gefertigt und weist trotzdem eine entsprechende Eigensteifigkeit auf, so dass die auf der Führungsschiene geführte Messschiene im abgebogenen Führungsschienenabschnitt bogenförmig umgelenkt werden kann, so dass die Messschiene von der horizontalen in eine senkrechte Stellung verschoben werden kann, wobei in der Endstellung der Messschiene diese immer noch von der Führungsschiene gehalten wird.

Die weitere Ausgestaltung der Vorrichtung sieht vor, dass die Führungsschiene mit der einendseitig ausgebildeten griffartigen Handhabe und mit dem am anderen Ende ausgebildeten bogenförmig mit einem Winkel von bevorzugterweise 45° ausgebildeten Führungsschienenabschnitt besteht, wobei die Führungsschiene eine Anzahl von bügelartigen Halterungen und eine an der Innenwandseite des abgebogenen Führungsschienenabschnittes angeordnete Umlenkrolle aufweist, so dass für die Führung der Messschiene auf der Führungsschiene die Messschiene durch die bügelartigen Halterungen auf der Führungsschiene gehalten wird. Im Endbereich der Führungsschiene wird die Messschiene zwischen der Umlenkrolle und dem abgebogenen Führungsschienenendabschnitt geführt und um etwa bevorzugterweise 45° abgebogen, damit das Ende der Messschiene mit der Messsonde in den Spalt zwischen Ruderschaft und Ruderkoker im Halslagerbereich eingeführt werden kann. Die Messschiene wird im abgebogenen Führungsschienenabschnitt zwischen diesem und der Umlenkrolle derart geführt, dass die Messschiene in etwa einem rechten Winkel aus dem Ende des abgebogenen Führungsschienenabschnittes herausgeführt ist, wobei die Messschiene an ihrem freien Ende des abgebogenen Messschienenabschnittes die Messsonde trägt, die aus einem plattenförmigen Formkörper besteht, deren Stärke zuzüglich der Materialstärke der Führungsschiene ein Maß für die Breite des Halslagerspiels ist.

Die an der Führungsschiene gehaltene und geführte Messschiene mit der eine vorgegebene Stärke aufweisenden Messsonde ist gegen Messschienen mit Messsonden anderer Stärken austauschbar.

Um die Messschiene in den Spalt zur Spielmessung einführen zu können, weist die Messschiene eine Länge auf, die größer ist als die Länge der Führungsschiene. Sowohl die Messschiene als auch die Messsonde bestehen bevorzugterweise aus Kunststoff oder einem anderen geeigneten Material.

Die Führungsschiene besteht dagegen aus einem unbiegsamen, festen und starren Material.

Die Messsonde an der Messschiene ist fest oder lösbar mit dieser verbunden, so dass bei letzterer Ausführungsform die Messsonden an den Messschienen gegen Messsonden anderer Stärke ausgetauscht werden können.

Des weiteren sieht die Erfindung ein Verfahren zur Durchführung von Kontrollen und zum Messen des Halslagerspiels zwischen dem Außenlager am Ruderschaft eines Ruders für Wasserfahrzeuge und dem mit dem Außenlager korrespondierenden Innenlager am Ruderkoker unter Verwendung der vorangehend beschriebenen Vorrichtung vor, bei dem die Führungsschiene mit aufgesetzter Messschiene mit ihrem abgebogenen Endabschnitt in eine Öffnung in der Außenwand des Ruderblattes des Ruders soweit eingeschoben wird, dass der abgebogene Führungsschienenendabschnitt der Führungsschiene im unteren Bereich des Spaltes zwischen dem Außenlager am Ruderschaft des Ruders für Wasserfahrzeuge und dem Innenlager am Ruderkoker zu liegen kommt, Wasserfahrzeuge und dem Innenlager am Ruderkoker zu liegen kommt, woraufhin die Messschiene auf der Führungsschiene soweit in den Spalt eingeschoben wird, dass die Messsonde der Messschiene im Spielmessbereich zu liegen kommt, wobei Messschienen mit Messsonden gegen Messschienen mit Messsonden anderer Stärke so lange auf der Führungsschiene ausgetauscht werden, bis die Stärke der Messschiene zusammen mit der Stärke der Messsonde der Breite des Spiels entspricht.

In der Zeichnung sind Ausführungsbeispiele der Erfindung dargestellt und zwar zeigt:
- Fig. 1: in einer Seitenansicht eine im Hinterschiffsbereich vorgesehene Ruderanordnung mit einem dem Ruderblatt zugeordneten Propeller,
- Fig. 2: eine vergrößerte Darstellung der Ruderanordnung mit in dem Ruderkoker angeordneten und gelagerten Ruderschaft,
- Fig. 3: einen senkrechten Schnitt gemäß Linie III-III in Fig. 2,
- Fig.4: eine schaubildliche Schnittdarstellung eines Teils des Hinterschiffes mit dem im Ruderkoker angeordneten Ruderschaft und dem Lager für den Ruderschaft,
- Fig. 5: einen senkrechten Längsschnitt durch den Ruderschaft mit dem Ruderkoker,
- Fig. 6: eine vergrößerte Darstellung des Abschnittes A des im Ruderkoker gelagerten Ruderschaftes,
- Fig.7: teils in Ansicht, teils in einem senkrechten vergrößerten Schnitt den im Ruderkoker gelagerten Ruderschaft mit dem Spalt zwischen den beiden Lagerteilen mit angedeutetem Spielmessbereich und mit in Arbeitsstellung gebrachter erfindungsgemäßen Vorrichtung aus einer Führungsschiene mit einer auf dieser gehaltenen und zu führenden Messschiene mit einendseitig vorgesehener Messsonde,
- Fig. 8: eine Seitenansicht der Führungsschiene in Arbeitsstellung mit auf dieser gehaltenen Messschiene mit einendseitig angebrachter Messsonde und mit abgewinkeltem Messschienenabschnitt,
- Fig. 9: eine verkleinerte schaubildliche Darstellung der in Fig. 8 dargestellten Vorrichtung,
- Fig. 10: eine vergrößerte Wiedergabe des Führungsschienenabschnittes A in Fig. 8,
- Fig. 11: eine Seitenansicht der Führungsschiene der erfindungsgemäßen Vorrichtung,
- Fig. 12: einen vergrößerten senkrechten Schnitt gemäß Linie XII-XII in Fig. 11,
- Fig. 13: eine schaubildliche Darstellung einer Messleiste mit einendseitig angeordneter Messsonde und
- Fig. 14: eine schaubildliche Ansicht eines Abschnittes des Ruderblattes mit in dessen Innenraum eingeführter, erfindungsgemäß ausgebildeter Vorrichtung.

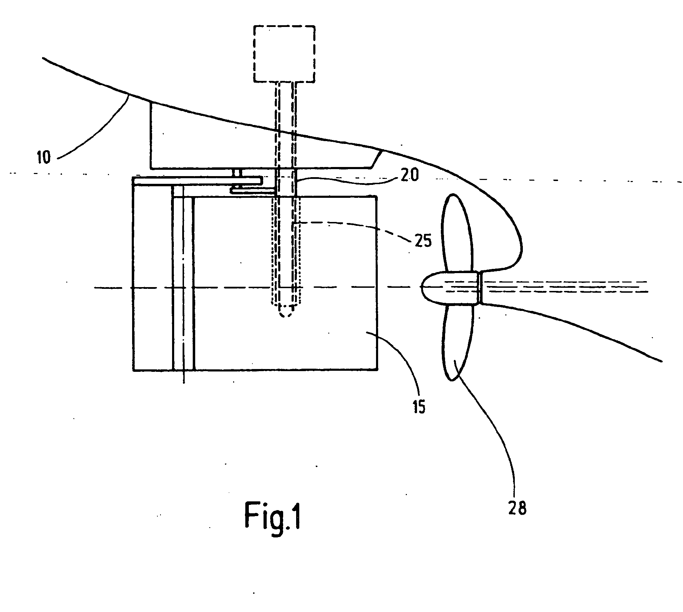

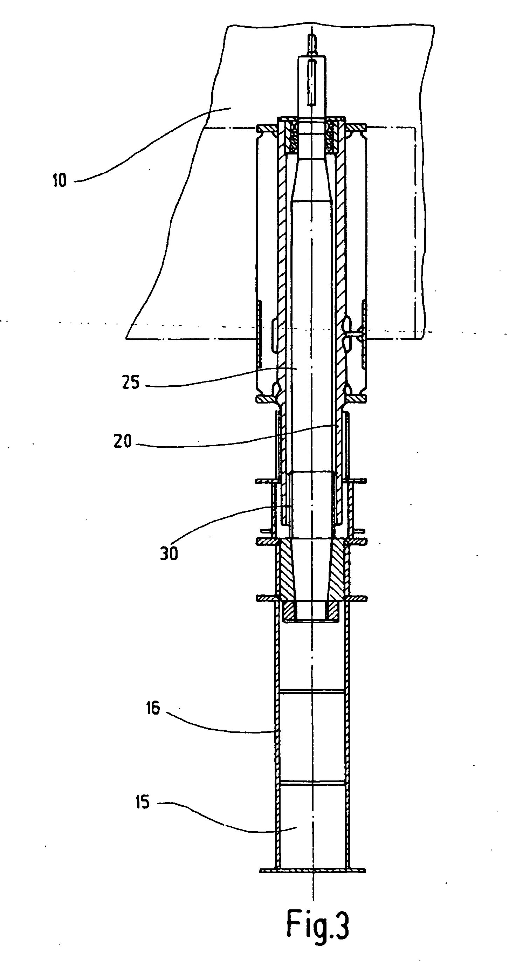

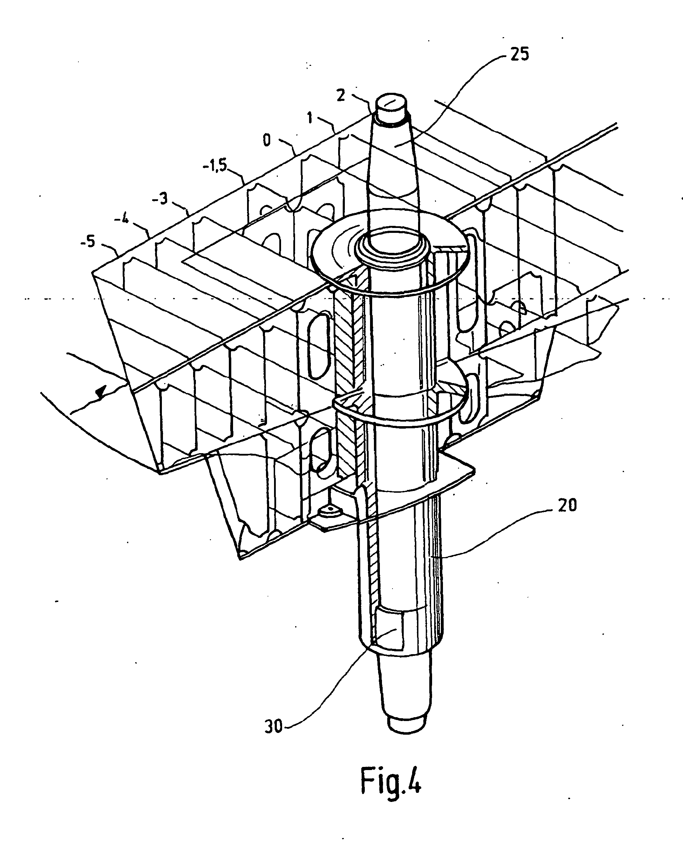

Bei der in Fig. 1, 2, 3 und 4 gezeigten Ausführungsform ist mit 10 ein Schiffskörper, mit 15 ein Ruderblatt eines Ruder, mit 20 ein Ruderkoker und mit 25 ein Ruderschaft bezeichnet.

Der als Kragträger ausgebildete Ruderkoker 20 ist mit seinem oberen Ende 20a mit dem bei 10 angedeuteten Schiffskörper fest verbunden und weist eine mittige Innenbohrung 21 auf, die sich in Ruderkokerlängsrichtung erstreckt und die den Ruderschaft 25 aufnimmt. Der Ruderkoker 20 ist in das Ruderblatt 15 hineingeführt, das mit dem freien unteren Ende des durch die Innenbohrung 21 des Ruderkokers 20 hindurchgeführten Ruderschaftes 25 fest verbunden ist.

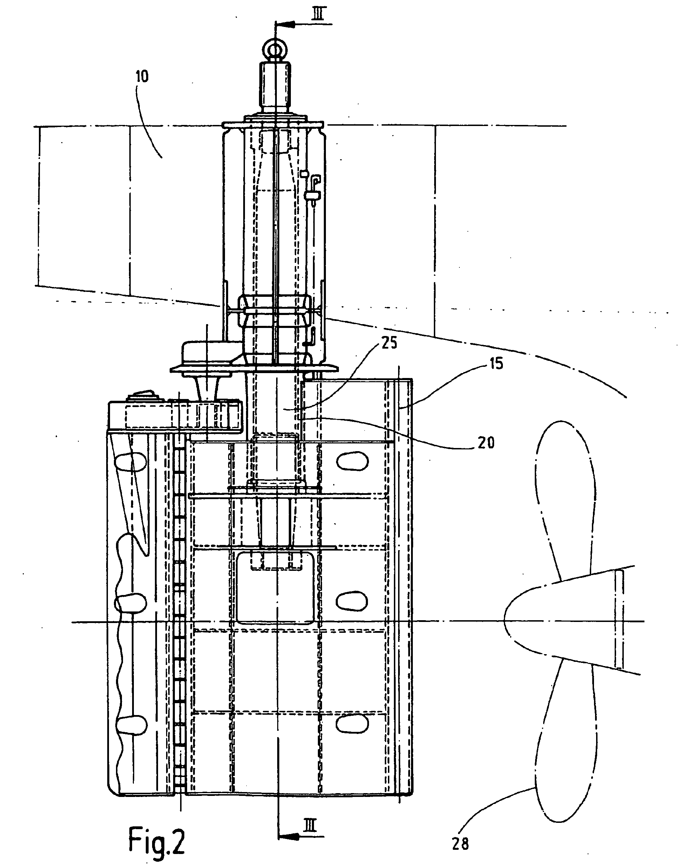

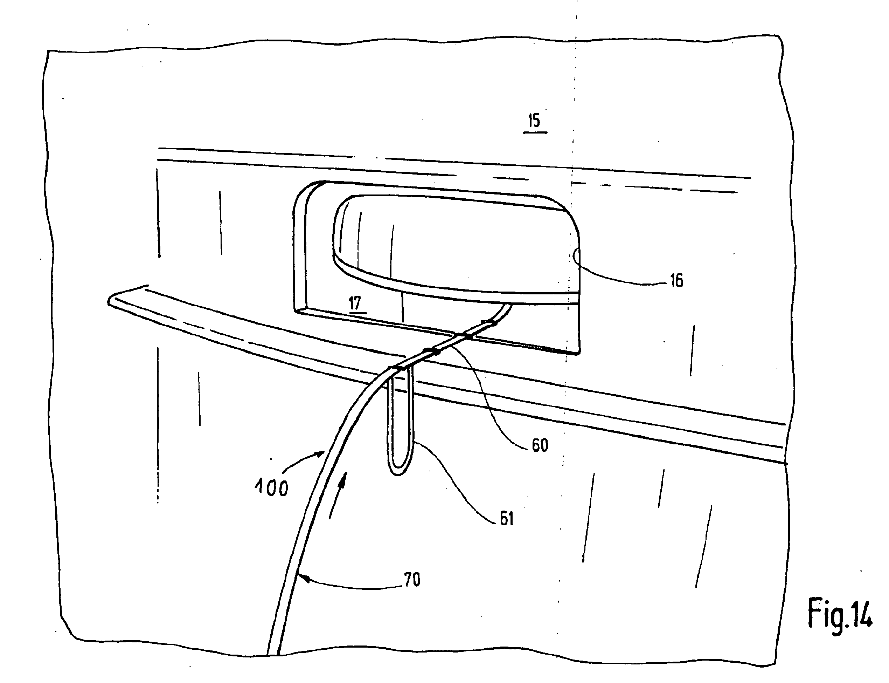

Dem Ruderblatt 15 des Ruders ist ein Propeller 28 zugeordnet (Fig. 1 und 2). Wie Fig. 14 zeigt, ist in der Außenwand 16 des Ruderblattes 15 mindestens eine Öffnung 17 vorgesehen.

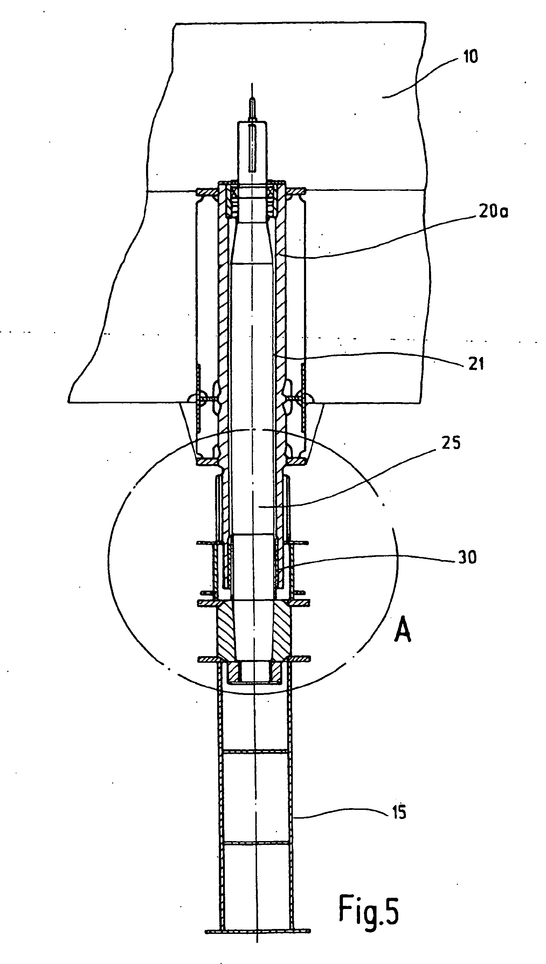

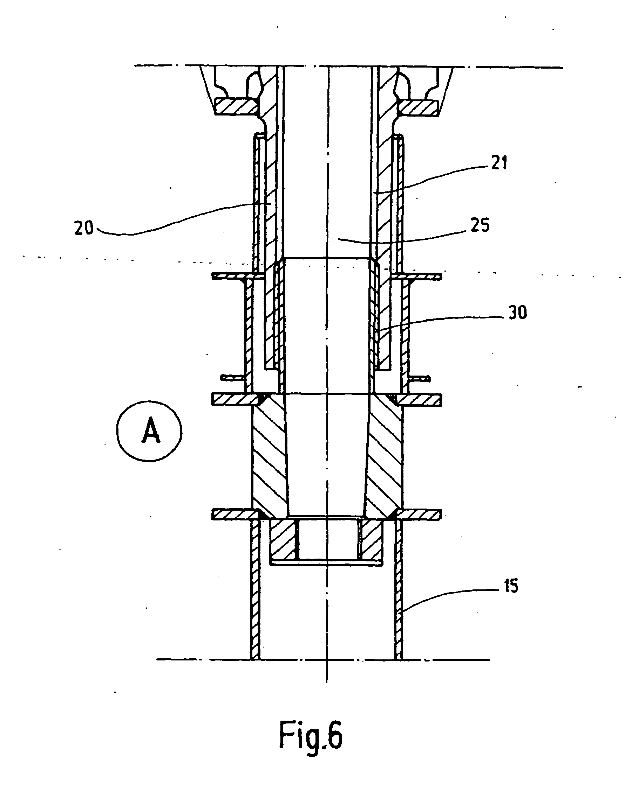

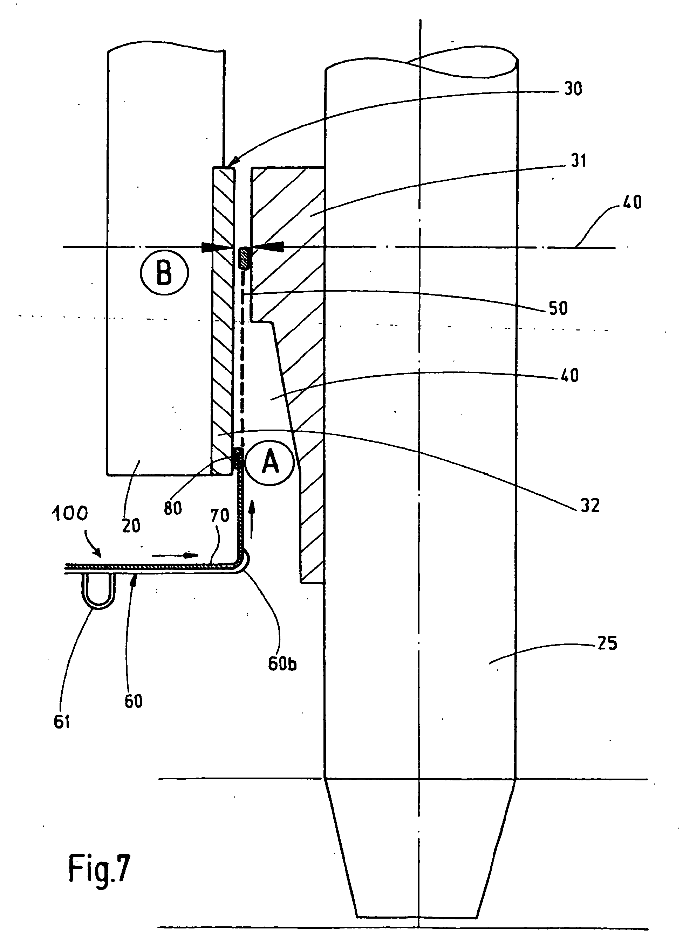

Zur Lagerung des Ruderschaftes 25 in dem Ruderkoker 20 ist im unteren Bereich des Ruderschaftes 25 ein Lager 30 vorgesehen, das von einem an dem Ruderschaft 25 angeordneten Außenlager und einem an der Innenwandseite des Ruderkokers 20 angeordneten Innenlager 32 gebildet wird, wobei das Innenlager 32 als Büchse fest im Ruderkoker 20 angeordnet ist (Fig. 5, 6 und 7). Zwischen dem Außenlager 31 und dem Innenlager 32 ist ein Spalt 35 ausgebildet, in dem die erfindungsgemäß ausgebildete Vorrichtung 100 einführbar ist, um das Spiel zwischen dem Ruderschaft 25 und dem Ruderkoker 20 kontrollieren und messen zu können. Der Spielmessbereich ist in Fig. 7 bei 40 und das Halslagerspiel bei 50 angedeutet.

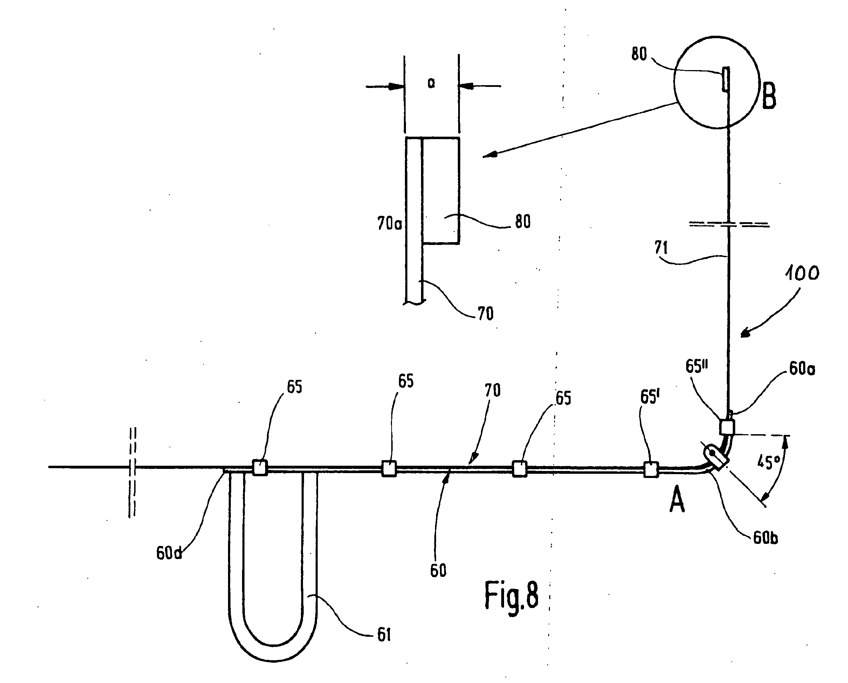

Die Vorrichtung 100 zum Kontrollieren und Messen des Halslagerspiels 50 zwischen dem Außenlager 31 an dem Ruderschaft 25 und an dem mit dem Außenlager 31 korrespondierenden Innenlager 32 an dem Ruderkoker 20 besteht gemäß Fig. 8, 9, 10, 11 und 12 aus einer Führungsschiene 60 und einer auf dieser Führungsschiene verschieblich angeordneten und gehaltenen Messschiene 70, die an ihrem freien Ende eine Messsonde 80 trägt.

Die Führungsschiene 60 weist benachbart zu ihrem einen freien Ende 60d eine griffartige Handhabe 61 auf. Das andere freie Ende 60a ist abgebogen bevorzugterweise in einem Winkel von 45°, so dass das freie Ende 60a des abgewinkelten Führungsschienenabschnittes 60b im rechten Winkel zum Führungsschienenabschnitt 60c steht, wobei der Führungsschienenabschnitt 60c eine größere Länge gegenüber dem abgewinkelten Führungsschienenabschnitt 60b aufweist.

Die Führungsschiene 60 besteht aus einem starren, d. h. unbiegsamen Material, z. B. aus Kunststoff, einem Metall oder einem anderen geeigneten Material, wobei das Material für die Führungsschiene 60 jeweils so gewählt ist, dass die Führungsschiene eine hohe Eigensteifigkeit aufweist. Die Führungsschiene 60 besteht bevorzugterweise aus einem Flachprofil, wobei die Führungsschiene 60 auch andere Querschnittsprofile aufweisen kann. Die Führungsschiene 60 ist jedoch immer so ausgebildet, dass die aus einem Flachprofil bestehende Messschiene 70 auf der Führungsschiene 60 verschieblich gehalten und in Führungsschienenlängsrichtung verschieblich ist (Fig. 8). Zur Halterung der Messschiene 70 auf der Führungsschiene 60 weist diese eine Anzahl von bügelartigen Halterungen 65 auf, die an der Führungsschiene so angebracht sind, dass die auf der Führungsschiene 60 liegende Messschiene 70 von diesen bügelartigen Halterungen 65 übergriffen wird (Fig. 8, 9, 11 und 12).

Die ebenfalls ein Flachprofil aufweisende Messschiene 70 besteht aus einem federnd-elastischen und eine gewisse Eigensteifigkeit aufweisenden Material bevorzugterweise aus Kunststoff, jedoch auch andere geeignete Materialien können eingesetzt werden.

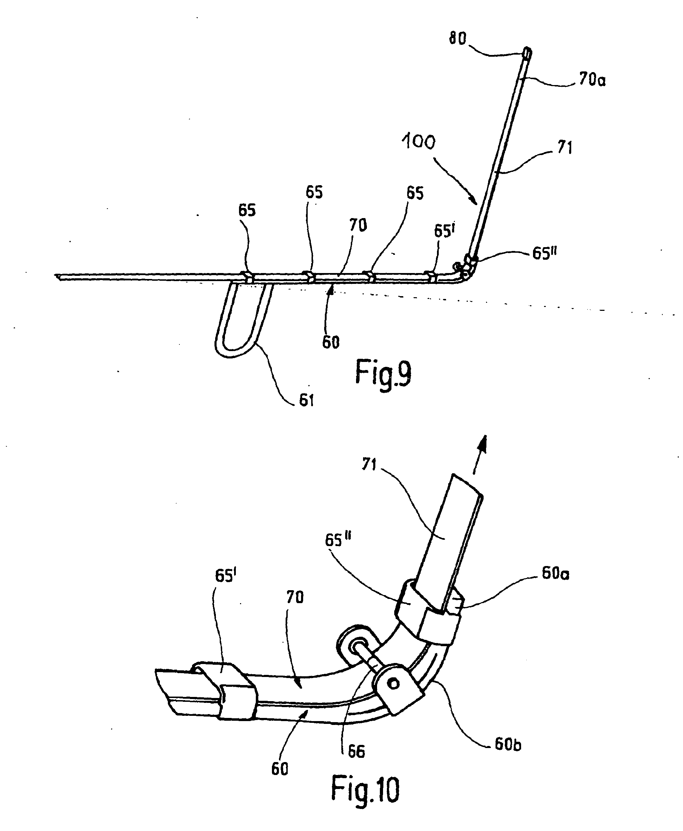

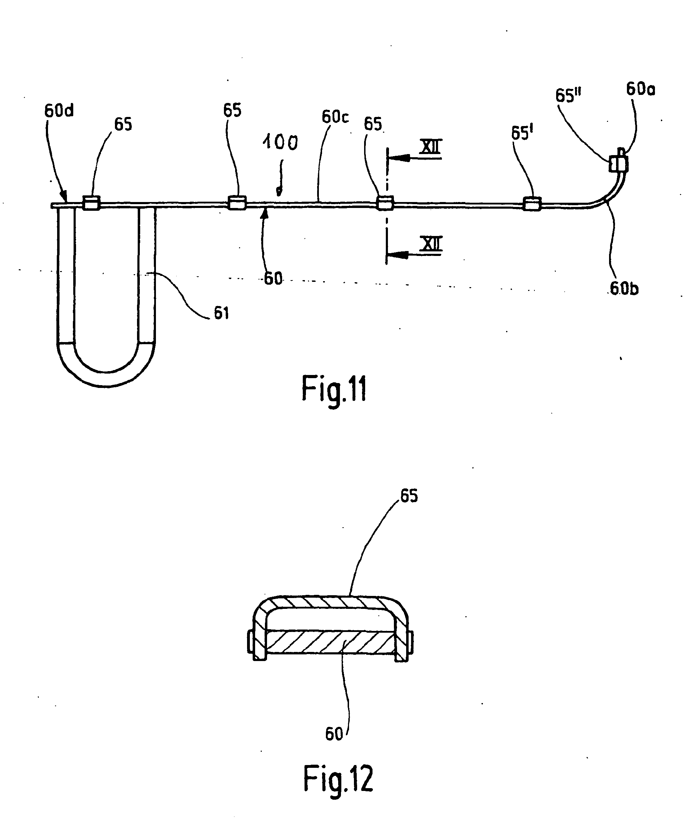

Die Breite der Messschiene 70 entspricht in etwa der Breite der Führungsschiene 60, so dass die Messschiene 70 durch die von den bügelartigen Halterungen 65 der Führungsschiene 60 gebildeten Öffnungen hindurchgeschoben werden kann. Das freie Ende 70a der Messschiene 70 trägt eine Messsonde 80, die als plattenförmiger Formkörper 81 ausgebildet und an der Messschiene 70 fest oder lösbar angebracht ist. Dadurch, dass die Messschiene 70 aus einem federnd-elastischen Material besteht, besteht die Möglichkeit, dass die auf der Führungsschiene 60 angeordnete Messschiene 70 in dem abgewinkelten Führungsschienenabschnitt 60b in gleicher Weise wie der Führungsschienenabschnitt 60b abgebogen ist, abgebogen werden kann (Fig. 10), wobei der abgebogene Messschienenabschnitt mit 71 bezeichnet ist. Um im abgewinkelten Führungsschienenabschnitt 60b eine Führung und Umlenkung der Messschiene 70 zu erreichen, ist im Bereich des abgewinkelten Führungsschienenabschnittes 60b zwischen den beiden bügelartigen Halterungen 65', 65" an der Innenwandseite eine Umlenkrolle 66 angeordnet, so dass die Messschiene zwischen dieser Umlenkrolle 66 und der Führungsschiene 60 im abgewinkelten Führungsschienenabschnitt 60b entsprechend dem bogenförmigen Verlauf dieses Abschnittes geführt und bewegt werden kann (Fig. 10 und 11). Im Bereich des abgewinkelten Führungsschienenabschnittes 60b der Führungsschiene 60 wird im Betriebszustand der Vorrichtung 100 die Messschiene umgelenkt, so dass die Messschiene bei einem weiteren Vorschub in den Spalt 35 zwischen dem Außenlager 31 und dem Innenlager 32 bis in den Spielmessbereich 40 eingeführt werden kann. Die Spielbreitenmessung erfolgt dann über die Messsonde 80 an der Messschiene 70, wobei die Gesamtstärke aus der Stärke des Materials der Messschiene 70 und der Stärke der Messsonde 80 der Breite des zu messenden Spiels 50 entspricht. Die Stärke der Messsonde 80 bzw. ihres plattenförmigen Formkörpers 81 und die Materialstärke der Messschiene 70 bilden dann ein Maß für die Breite des Halslagerspiels 50 (Fig. 7).

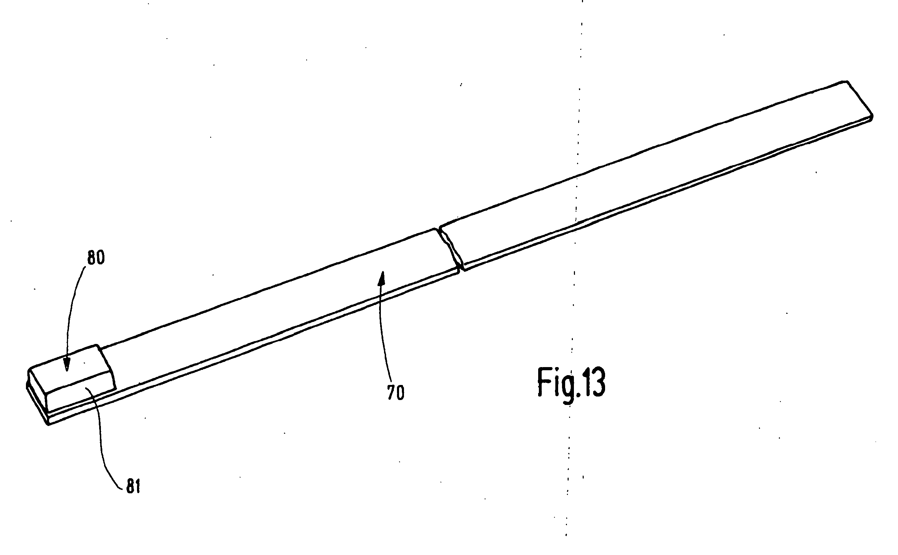

Die an der Führungsschiene 60 gehaltene Messschiene 70 ist mit der eine vorgegebene Stärke aufweisenden und geführten Messsonde 80 gegen Messschienen 70 mit Messsonden 80 anderer Stärken austauschbar. Fig. 13 zeigt eine derartige Messschiene 70 mit endseitig angeordneter Messsonde 80. Für die Messung des Halslagerspiels 50 steht eine Anzahl von Messschienen 70 mit Messsonden 80 zur Verfügung, die unterschiedliche Stärken aufweisen, so dass nach dem Einführen mehrerer Messschienen 70 mit unterschiedlichen Stärken aufweisenden Messsonden 80 dann letztlich eine Messschiene mit einer Messsonde in den Spalt eingeschoben und den Spalt aushüllt, so dass dann die vorgegebene Gesamtstärke a der Messschiene mit der Messsonde ein Maß für die Breite des Halslagerspiels 50 ist (Fig. 8).

Die Messschiene 70 bzw. die Messschienen weisen eine Länge auf, die weitaus größer ist, als die Länge der Führungsschiene 60, damit eine ausreichende Länge an Messschienen 70 zur Verfügung steht, um die Messsonde 80 in den Spielmessbereich 40 schieben zu können.

Die erfindungsgemäß ausgebildete Vorrichtung 100 wird wie folgt eingesetzt:

Nach dem Einschieben der Messschiene 70 mit einer Messsonde 80 beliebig gewählter Gesamtstärke a wird über den abgewinkelten Führungsschienenabschnitt 60b der Führungsschiene 60 in die Führungsschiene 60 so eingeschoben, dass die Messschiene 70 von den schlaufenförmigen Halterungen 65, 65', 65" und der Umlenkrolle 66 an der Innenwandseite der Führungsschiene 60 zu liegen kommt, so dass das freie Ende 70a der Messschiene 70 zusammen mit der Messsonde 80 aus dem Ende der Führungsschiene 60 herausragt. In dieser Stellung wird vermittels der griffartigen Handhabe 61 die Führungsschiene 60 mit der Messschiene 70 in eine Öffnung 17 in der Außenwand 16 des Ruderblattes 15 eingeführt, wobei die Führungsschiene 60 eine horizontale Stellung einnimmt (Fig. 14). Der abgewinkelte Führungsschienenabschnitt 60b der Führungsschiene 60 liegt dann im Innenraum des Ruderblattes 15 und zwar im Bereich des Spaltes 35 zwischen dem Außenlager 31 und dem Innenlager 32 des Lagers 30 (Fig. 7). In dieser Stellung wird dann die Messschiene 70 auf der Führungsschiene 60 verschoben, so dass das freie Ende der Messschiene 70 mit der Messsonde 80 von der Position A in die Position B bewegt wird, bis der Spielmessbereich 40 erreicht wird. Wird festgestellt, dass aufgrund der gewählten Messschiene 70 mit ihrer Messsonde 80 noch in dem Spalt 35 zwischen dem Außenlager 31 und dem Innenlager 32 ein gewisses Spiel besteht, dann wird die Messschiene 70 ausgetauscht gegen eine Messschiene mit einer Messsonde 80 deren Gesamtstärke a dann größer gewählt wird, wobei solange Messschienen mit Messsonden ausgetauscht werden, bis eine Messschiene 70 mit einer Messsonde 80 das zu messende Spiel völlig ausfüllt, wobei dann die Gesamtstärke der Messschiene 70 mit der Messsonde 80 der Breite des Spiels entspricht. Da eine Anzahl von Messschienen 70 mit Messsonden 80 unterschiedlicher Gesamtstärken a zur Verfügung steht, kann mühelos bei entsprechender Wahl der Messschiene mit der Messsonde die Breite des Spiels gemessen werden.

Die erfindungsgemäße Vorrichtung 100 eignet sich besonders vorteilhaft für die Verwendung zum Kontrollieren und Messen des Halslagerspiels von Rudern für Wasserfahrzeuge, insbesondere von im Dock liegenden oder sich im Wasser befindlichen Wasserfahrzeugen durch Überwasser oder Unterwasser tätigen Arbeitskräften.

### Bezugszeichenliste

- 10: Schiffskörper
- 15: Ruderblatt
- 16: Außenwand
- 17: Öffnung

- 20: Ruderkoker
- 20a: oberes Ende
- 21: Innenbohrung
- 25: Ruderschaft
- 28: Propeller

- 30: Lager
- 31: Außenlager
- 32: Innenlager
- 35: Spalt

- 40: Spielmessbereich
- 50: Halslagerspiel

- 60: Führungsschiene
- 60a: freies Ende
- 60b: abgewinkelter Führungsschienenabschnitt Innenwandseite

- 60c: Führungsschienenabschnitt
- 60d: freies Ende
- 60f: Führungsschienenabschnitt
- 61: griffartige Handhabe
- 65: bügelartige Halterung
- 65': bügelartige Halterung
- 65": bügelartige Halterung
- 66: Umlenkrolle

- 70: Messschiene
- 70a: freies Ende
- 71: abgebogener Messschienenabschnitt

- 80: Messsonde
- 81: plattenförmiger Formkörper

- 100: Vorrichtung

## Patentansprüche

1. Vorrichtung (100) zum Kontrollieren und Messen des Halslagerspiels (50) zwischen dem Außenlager (31) am Ruderschaft (25) eines Ruders für Wasserfahrzeuge und dem mit dem Außenlager (31) korrespondierenden Innenlager (32) am Ruderkoker (20), mit einer vermittels einer mit einer griffartigen Handhabe (61) versehenen Führungsschiene (60) in den Spalt (35) zwischen dem Außenlager (31) und dem Innenlager (32) bis in den Spielmessbereich (40) einführbaren Messschiene (70) aus einem federnd-elastischen und eine Eigensteifigkeit aufweisenden Material mit an deren freien Ende (70a) angeordneten Messsonde (80) für die Spielbreitenmessung, wobei die Messschiene (70) mit der Messsonde (80) mit vorgegebener Stärke (a) gegen Messschienen mit Messsonden mit anderen Stärken bis zur Erreichung einer Übereinstimmung der Spielbreite mit der Stärke einer Messschiene (70) mit der Messsonde (80) ausgetauscht werden.

2. Vorrichtung nach Anspruch 1,
**dadurch gekennzeichnet,**
**dass** die Vorrichtung (100) die mit einer griffartigen Handhabe (61) versehenen Führungsschiene (60) mit an deren freien Ende (60a) bogenförmig abgewinkelten Führungsschienenabschnitt (60b) und die auf der Führungsschiene (60) verschiebliche und im Bereich des abgewinkelten Führungsschienenabschnittes (60a) umgelenkte sowie in den Spalt (35) zwischen dem Außenlager (31) und dem Innenlager (32) bis in den Spielmessbereich (40) einführbare Messschiene (70) aus einem federnd-elastischen und eine Eigensteifigkeit aufweisenden Material mit an deren freien Ende (70a) angeordneten Messsonde (70) für die Spielbreitenmessung umfasst.

3. Vorrichtung nach einem der Ansprüche 1 oder 2,
**dadurch gekennzeichnet,**
**dass** die Vorrichtung (100) aus der Führungsschiene (60) mit der einendseitig ausgebildeten griffartigen Handhabe (61) und mit dem am anderen Ende (60a) ausgebildeten bogenförmig mit einem Winkel von bevorzugterweise 45° ausgebildeten Führungsschienenabschnitt (60b), wobei die Führungsschiene (60) eine Anzahl von bügelartigen Halterungen (65) und einer an der Innenwandseite des abgebogenen Führungsschienenabschnittes (60b) angeordnete Umlenkrolle (66) aufweist, und aus der von den schlaufenförmigen Halterungen (65) der Führungsschiene (60) gehaltenen und auf deren Innenwandfläche (60c) in Führungsschienenlängsrichtung verschieblich gehaltenen und im Bereich des abgebogenen Führungsschienenabschnittes (60b) zwischen diesem und der Umlenkrolle (66) derart geführten Messschiene (70) besteht, dass die Messschiene (70) in einem etwa rechten Winkel aus dem Ende (60a) des abgebogenen Führungsschienenabschnittes (60b) herausgeführt ist, wobei die Messschiene (70) an ihrem freien Ende (70a) des in Arbeitsstellung der Vorrichtung (100) abgebogenen Messschienenabschnittes (71) die Messsonde (80) trägt, die aus einem plattenförmigen Formkörper (81) besteht, dessen Stärke zuzüglich der Materialstärke der Messschiene (70) ein Maß für die Breite des Halslagerspiels (50) ist.

4. Vorrichtung nach einem der Ansprüche 1 bis 3,
**dadurch gekennzeichnet,**
**dass** die an der Führungsschiene (60) gehaltene und geführte Messschiene (70) mit der eine vorgegebene Stärke aufweisenden Messsonde (80) gegen Messschienen (70) mit Messsonden (80) anderer Stärken austauschbar ist.

5. Vorrichtung nach einem der Ansprüche 1 bis 4,
**dadurch gekennzeichnet,**
**dass** die Messschienen (70) eine Länge aufweisen, die größer ist als die Länge der Führungsschiene (60).

6. Vorrichtung nach einem der Ansprüche 1 bis 5,
**dadurch gekennzeichnet,**
**dass** die Messsonde (80) aus Kunststoff oder einem anderen geeigneten Material besteht.

7. Vorrichtung nach einem der Ansprüche 1 bis 6,
**dadurch gekennzeichnet,**
**dass** die Führungsschiene (60) aus einem unbiegsamen Material besteht.

8. Vorrichtung nach einem der Ansprüche 1 bis 7,
**dadurch gekennzeichnet,**
**dass** die Messsonde (80) an der Messschiene (70) fest mit dieser verbunden ist.

9. Vorrichtung nach einem der Ansprüche 1 bis 7,
**dadurch gekennzeichnet,**
**dass** die Messsonde (80) an der Messschiene (70) lösbar mit dieser verbunden ist.

10. Vorrichtung nach einem der Ansprüche 1 bis 9,
**dadurch gekennzeichnet,**
**dass** die Messsonde (80) an der Messschiene (70) gegen Messsonden mit anderen Stärken austauschbar ist.

11. Vorrichtung nach einem der Ansprüche 1 bis 10,
**dadurch gekennzeichnet,**
**dass** die Führungsschiene (60) und die Messschiene (70) aus Flachprofilen bestehen.

12. Verfahren zur Durchführung von Kontrollen und zum Messen des Halslagerspiels (50) zwischen dem Außenlager (31) am Ruderschaft (25) eines Ruders für Wasserfahrzeuge und dem mit dem Außenlager (31) korrespondierenden Innenlager (32) am Ruderkoker (20), unter Verwendung einer Vorrichtung (100) nach einem der Ansprüche 1 bis 11,
**dadurch gekennzeichnet,**
**dass** die Führungsschiene (60) mit aufgesetzter Messschiene (70) mit ihrem abgebogenen Führungsschienenabschnitt (60b) in eine Öffnung (17) in der Außenwand (16) des Ruderblattes (15) des Ruders soweit eingeschoben wird, dass der abgebogene Führungsschienenabschnitt (60b) der Führungsschiene (60) im unteren Bereich des Spaltes (35) zwischen dem Außenlager (31) am Ruderschaft (25) des Ruders für Wasserfahrzeuge und dem Innenlager (32) am Ruderkoker (20) zu liegen kommt, woraufhin die Messschiene (70) auf der Führungsschiene (60) soweit in den Spalt (35) eingeschoben wird, dass die Messsonde (80) der Messschiene (70) im Spielmessbereich (40) zu liegen kommt, wobei Messschienen (70) mit Messsonden (80) solange gegen Messschienen mit Messsonden anderen Stärken auf der Führungsschiene (60) ausgetauscht werden, bis die Stärke der Messschiene (70) zusammen mit der Stärke der Messsonde (80) der Breite des Spiels entspricht.

13. Verwendung einer Vorrichtung (100) gemäß den Ansprüchen 1 bis 11 zum Kontrollieren und Messen des Halslagerspiels von Rudern für Wasserfahrzeuge, insbesondere von im Dock liegenden oder sich im Wasser befindenden Wasserfahrzeugen Überwasser oder Unterwasser tätigen Arbeitskräften.

## Claims

1. Arrangement (100) for controlling and measuring the journal bearing clearance (50) between the outer bearing (31) on the rudder stock (25) of a rudder for watercraft and the inner bearing (32) on the rudder trunk (20) corresponding to the outer bearing (31), comprising a measurement rail (70) made of a resilient elastic material having an intrinsic stiffness, said measurement rail (70) can be inserted in the gap (35) between the outer bearing (31) and the inner bearing (32) into the clearance measurement region (40) by means of a guide rail (60) provided with a grip-like handle (61), and having a measurement probe (80) disposed at the free end (70a) thereof for measurement of the clearance widths, wherein the measurement rail (70) having the measurement probe (80) having a predetermined thickness (a) can be exchanged for measurement rails having measurement probes having different thicknesses until agreement of the clearance width with the thickness of a measurement rail (70) having the measurement probe (80) is achieved.

2. The arrangement according to claim 1,
**characterised in that**
the arrangement (100) comprises the guide rail (60) provided with a grip-like handle (61) having guide rail section (60b) bent in an arcuate manner at the free end (60a) thereof and the measurement rail (70) made of a resilient-elastic material having an intrinsic stiffness, which is displaceable on the guide rail (60) and is deflected in the region of the bent guide rail section (60b) and which can be inserted in the gap (35) between the outer bearing (31) and the inner bearing (32) into the clearance measurement region, having measurement probe (80) disposed at the free end (70a) thereof for measurement of the clearance width.

3. The arrangement according to any one of claims 1 or 2,
**characterised in that**
the arrangement (100) consists of the guide rail (60) having the grip-like handle (61) formed at one end and having the guide rail section (60b) formed at the other end (60a) and configured in an arcuate manner with an angle of preferably 45°, wherein the guide rail (60) comprises a number of clip-like holders (65) and a deflecting roller (66) disposed on the inner wall side of the bent guide rail section (60b) and consists of the measurement rail (70), which is held by the loop-shaped holders (65) of the guide rail (60) and held displaceably in the guide rail longitudinal direction on the inner wall surface (60c) thereof and which is guided in the region of the bent guide rail section (60b) between this and the deflecting roller (66) in such a manner that the measurement rail (70) is guided out from the end (60a) of the bent guide rail section (60b) approximately at right angles, wherein the measurement rail (70) carries the measurement probe (80) at its free end (70a) of the measurement rail section (71) bent in the working position of the arrangement (100), which measurement probe consists of a plate-shaped moulded body (81) whose thickness plus the material thickness of the measurement rail (70) is a measure for the width of the journal bearing clearance (50).

4. The arrangement according to any one of claims 1 to 3,
**characterised in that**
the measurement rail (70) held and guided on the guide rail (60) having the measurement probe (80) having a predefined thickness can be exchanged for measurement rails (70) having measurement probes (80) of different thicknesses.

5. The arrangement according to any one of claims 1 to 4,
**characterised in that**
the measurement rails (70) have a length which is greater than the length of the guide rail (60).

6. The arrangement according to any one of claims 1 to 5,
**characterised in that**
the measurement probe (80) consists of plastic or another suitable material.

7. The arrangement according to any one of claims 1 to 6,
**characterised in that**
the guide rail (60) consists of an inflexible material.

8. The arrangement according to any one of claims 1 to 7,
**characterised in that**
the measurement probe (80) on the measurement rail (70) is firmly connected to said rail.

9. The arrangement according to any one of claims 1 to 7,
**characterised in that**
the measurement probe (80) on the measurement rail (70) is detachably connected to said rail.

10. The arrangement according to any one of claims 1 to 9,
**characterised in that**
the measurement probe (80) on the measurement rail (70) can be exchanged for measurement probes having different thicknesses.

11. The arrangement according to any one of claims 1 to 10,
**characterised in that**
the guide rail (60) and the measurement rail (70) consist of flat profiles.

12. A method for carrying out controls and for measurement of the journal bearing clearance (50) between the outer bearing (31) on the rudder stock (25) of a rudder for watercraft and the inner bearing (32) on the rudder trunk (20) corresponding to the outer bearing (31), using an arrangement (100) according to any one of claims 1 to 11,
**characterised in that**
the guide rail (60) with measurement rail (70) placed thereon is inserted with its bent guide rail section (60b) into an opening (17) in the outer wall (16) of the rudder blade (15) of the rudder until the bent guide rail section (60b) of the guide rail (60) comes to lie in the lower region of the gap (35) between the outer bearing (31) on the rudder stock (25) of the rudder for watercraft and the inner bearing (32) on the rudder trunk (20), whereupon the measurement rail (70) on the guide rail (60) is inserted so far into the gap (35) that the measurement probe (80) of the measurement rail (70) comes to rest in the clearance measurement region (40), wherein measurement rails (70) with measurement probes (80) can be exchanged for measurement rails with measurement probes of different thicknesses on the guide rail (60) until the thickness of the measurement rail (70) together with the thickness of the measurement probe (80) corresponds to the width of the clearance.

13. Use of an arrangement (100) according to claims 1 to 11 for controlling and measuring the journal bearing clearance of rudders for watercraft, in particular of watercraft in dock or located in the water, with the workforce working above water or under water.

## Revendications

1. Dispositif (100) pour contrôler et mesurer le jeu (50) entre le palier externe (31) sur la mèche de gouvernail (25) d'un bateau et le palier interne (32) sur le tube de jaumière (20), correspondant au palier externe (31), comprenant un rail de mesure (70) en matériau souple-élastique et présentant une rigidité inhérente pouvant être introduit, jusque dans la plage de mesure du jeu (40), dans la fente (35) entre le palier externe (31) et le palier interne (32) au moyen d'un rail de guidage (60) doté d'une manette (61) en forme de poignée, comprenant une sonde de mesure (80) disposée sur son extrémité libre (70a) pour la mesure de la largeur du jeu, sachant que le rail de mesure (70) avec la sonde de mesure (80) ayant une épaisseur prédéfinie (a) est échangé contre des rails de mesure avec des sondes de mesure présentant d'autres épaisseurs jusqu'à ce que l'on obtienne une concordance de largeur du jeu avec l'épaisseur d'un rail de mesure (70) avec la sonde de mesure (80).

2. Dispositif selon la revendication 1,
**caractérisé en ce que**
le dispositif (100) comprend le rail de guidage (60) doté d'une manette (61) en forme de poignée avec sur son extrémité libre (60a), un tronçon de rail de guidage (60b) coudé et arqué et le rail de mesure (70) en matériau souple-élastique et présentant une rigidité inhérente, pouvant être poussé sur le rail de guidage (60) et dévié au niveau du tronçon de rail de guidage (60b) coudé et arqué et pouvant être introduit, jusque dans la plage de mesure du jeu (40), dans la fente (35) entre le palier externe (31) et le palier interne (32), comprenant une sonde de mesure (80) disposée sur son extrémité libre (70a) pour la mesure de la largeur du jeu.

3. Dispositif selon la revendication 1 ou 2,
**caractérisé en ce que**
le dispositif (100) est composé du rail de guidage (60) avec la manette (61) en forme de poignée formée du côté d'une extrémité et avec la section de rail de guidage (60b) arquée avec un angle de préférence de 45° formée sur l'autre extrémité (60a), sachant que le rail de guidage (60) présente une pluralité de fixations de type étrier (65) et une poulie de déviation (66) disposée sur le côté de la paroi intérieure de la section de rail de guidage coudée (60b), et est composé du rail de mesure (70) maintenu par les fixations en forme de passant (65) du rail de guidage (60) et maintenu de manière à pouvoir être poussé sur sa face de paroi intérieure (60c) dans la direction longitudinale du rail de guidage et dirigé ainsi au niveau de la section de rail de guidage coudée (60b) entre celle-ci et la poulie de déviation (66) que le rail de mesure (70) est sorti dans un angle approximativement droit de l'extrémité (60a) de la section de rail de guidage coudée (60b), sachant que le rail de mesure (70) sur son extrémité libre (70a) du tronçon de rail de mesure (71) coudé en position de travail du dispositif (100), porte la sonde de mesure (80) qui est composée d'un corps moulé (81) en forme de plaque dont l'épaisseur par rapport à l'épaisseur du matériau du rail de mesure (70) est une mesure pour la largeur du jeu (50).

4. Dispositif selon l'une des revendications 1 à 3,
**caractérisé en ce que**
le rail de mesure (70) maintenu et dirigé sur le rail de guidage (60) avec la sonde de mesure (80) présentant une épaisseur prédéfinie peut être échangé contre des rails de guidage (70) avec des sondes de mesure (80) d'autres épaisseurs.

5. Dispositif selon l'une des revendications 1 à 4,
**caractérisé en ce que**
les rails de mesure (70) présentent une longueur qui est supérieure à la longueur du rail de guidage (60).

6. Dispositif selon l'une des revendications 1 à 5,
**caractérisé en ce que**
la sonde de mesure (80) est en plastique ou dans un autre matériau approprié.

7. Dispositif selon l'une des revendications 1 à 6,
**caractérisé en ce que**
le rail de guidage (60) est composé d'un matériau inflexible.

8. Dispositif selon l'une des revendications 1 à 7,
**caractérisé en ce que**
la sonde de mesure (80) sur le rail de mesure (70) est reliée fixement à celui-ci.

9. Dispositif selon l'une des revendications 1 à 7,
**caractérisé en ce que**
la sonde de mesure (80) sur le rail de mesure (70) est reliée à celui-ci de manière séparable.

10. Dispositif selon l'une des revendications 1 à 9,
**caractérisé en ce que**
la sonde de mesure (80) sur le rail de mesure (70) peut être échangée contre des sondes de mesure d'autres épaisseurs.

11. Dispositif selon l'une des revendications 1 à 10,
**caractérisé en ce que**
le rail de guidage (60) et le rail de mesure (70) sont en profilé plat.

12. Procédé pour contrôler et mesurer le jeu (50) entre le palier externe (31) sur la mèche de gouvernail (25) d'un bateau et le palier interne (32) sur le tube de jaumière (20), correspondant au palier externe (31), en employant un dispositif (100) selon l'une des revendications 1 à 11,
**caractérisé en ce que** le
rail de guidage (60) avec le rail de mesure (70) posé avec son tronçon de rail de guidage (60b) arqué est poussé si loin dans une ouverture (17) dans la paroi extérieure (16) du safran (15) du gouvernail, que le tronçon de rail de guidage (60b) arqué du rail de guidage (60) vient se poser dans la partie inférieure de la fente (35) entre le palier externe (31) sur la mèche de gouvernail (25) d'un bateau et le palier interne (32) sur le tube de jaumière (20), sur quoi le rail de mesure (70) sur le rail de guidage (60) est poussé si loin dans la fente (35) que la sonde de mesure (80) du rail de mesure (70) vient se placer dans la plage de mesure du jeu (40), sachant que des rails de mesure (70) avec des sondes de mesure (80) peuvent être échangés contre des rails de mesure avec des sondes de mesure d'autres épaisseurs sur le rail de guidage (60) jusqu'à ce que l'épaisseur du rail de mesure (70) conjointement avec l'épaisseur de la sonde de mesure (80) corresponde à la largeur du jeu.

13. Utilisation d'un dispositif (100) selon l'une des revendications 1 à 11 contrôler et mesurer le jeu d'un gouvernail d'un bateau, en particulier de bateaux présents dans le dock ou se trouvant dans l'eau, par du personnel travaillant sur ou sous l'eau.
